## Europäisches Patentamt

(19) **European Patent Office**

**Office européen des brevets**

(11) Veröffentlichungsnummer: **0 092 090**
**B1**

(12) **EUROPÄISCHE PATENTSCHRIFT**

(45) Veröffentlichungstag der Patentschrift:
18.12.85

(51) Int. Cl.⁴: **G 02 B 7/00**, G 02 B 7/18, G 02 B 21/06

(21) Anmeldenummer: 83103259.4

(22) Anmeldetag: 02.04.83

(54) **Optisches Justierelement.**

(30) Priorität: 17.04.82 DE 3214268

(43) Veröffentlichungstag der Anmeldung:
26.10.83 Patentblatt 83/43

(45) Bekanntmachung des Hinweises auf die Patenterteilung:
18.12.85 Patentblatt 85/51

(84) Benannte Vertragsstaaten:
AT CH DE FR GB LI

(56) Entgegenhaltungen:
DE - B - 1 094 485
DE - B - 2 505 774
DE - C - 720 904
DE - C - 1 116 911
DE - C - 1 127 113

Patent Abstracts of Japan, vol.1, no.145, 25. November 1977, Seite 7385E77 & JP-A-52-84748

(73) Patentinhaber: Firma Carl Zeiss, D-7920 Heidenheim (Brenz) (DE)

(72) Erfinder: Weimer, Eugen, Dipl.-Phys.,
Schradenbergstrasse 2, D-7081 Essingen (DE)
Erfinder: Müller, Gerhard, Prof. Dr.,
Philipp-Funk-Strasse 112, D-7080 Aalen (DE)

# Beschreibung

Die Erfindung betrifft zwei optische Justierelemente sowie deren Verwendung zur zentriergenauen Einkopplung eines monochromatischen, parallelen Strahlenbündels in ein Lichtmikroskop.

Es ist bekannt zur intensiven punktförmigen Beleuchtung mikroskopischer Präparate für photometrische oder spektroskopische Untersuchungen, beispielsweise zur selektiven Anregung einzelner Probenbereiche für die Fluoreszenz- oder Ramananalyse, einen Laserstrahl in das Beleuchtungssystem eines Lichtmikroskops einzukoppeln, der vom Objektiv des Mikroskops beugungsbegrenzt auf einen Durchmesser von ca. 1 μm in der Objektebene fokussiert wird.

Bei derartigen Anwendungen ist darauf zu achten, dass die optischen Achsen des Mikroskops und der zusätzlichen Laserbeleuchtungseinrichtung exakt übereinstimmen; ein Versatz der Achsen führt zu einer ungleichmässigen Ausleuchtung der Objektivpupille, was sich in einer unerwünschten Auffächerung des Laserfokus in der Objektebene bemerkbar macht.

Während der Betriebsdauer des Lasers treten jedoch im Zuge einer langsamen Drift Versetzungen und Verkippungen des Laserstrahls um kleine Beträge auf. Dabei wird der Versatz von der in der Regel verwendeten, dem Laser nachgeschalteten Aufweitungsoptik noch um den Aufweitungsfaktor vergrössert. Somit ergibt sich die Notwendigkeit Justiermittel vorzusehen, mit denen der Versatz und die Kippung des Laserstrahls in Bezug auf die optische Achse des Mikroskops kompensiert werden können.

Als Justiermittel für Achskippungen können in bekannter Weise eventuell ohnehin im Strahlengang befindliche Umlenkspiegel verwendet werden. Dabei ist zu beachten, dass mit solchen Justierspiegeln in der Regel ein zusätzlicher Versatz eingeführt wird, da die Spiegelebene, die Kippachse des Spiegels und die optische Achse des Lasers sich nicht immer exakt in einem Punkte schneiden.

Aus der DE-C-720904 ist es weiterhin bekannt, zum Justieren von Achskippungen zwei unabhängig voneinander um die optische Achse drehbare, transparente Keile zu verwenden.

Als Justiermittel für Parallelversatz sind z.B. aus der DE-C-1094485 sogenannte Planplattenmikrometer aus zwei in ihrer Neigung gegen die optische Achse veränderbaren Glasplatten mit planparallelen Flächen bekannt. Eine derartige Justiereinrichtung hat jedoch einmal den Nachteil, dass die Transmission der Platten, auch bei weitgehender Entspiegelung, winkelabhängig ist und dass ausserdem die Einstellmechanik, die gegebenenfalls ein Untersetzungsgetriebe zu feinfühligen Einstellungen enthalten muss, relativ aufwendig ausfällt.

Es ist die Aufgabe der vorliegenden Erfindung ein optisches Justierelement zur achsenparallelen Versetzung eines in ein optisches Gerät einzukoppelnden Strahlenbündels zu schaffen, das einen verhältnismässig einfachen Aufbau besitzt und bequem zu handhaben ist.

Diese Aufgabe wird durch eine Ausbildung gemäss den Kennzeichen der Ansprüche 1 bzw. 2 gelöst.

Die Lösung nach Anspruch 1 sieht zwei unter festem Winkel gegen die optische Achse geneigte Planplatten vor, die vorzugsweise beidseitig mit einer Entspiegelungsschicht versehen sind, um unerwünschte Reflexionen zu verhindern. Diese Anordnung hat den Vorteil, dass keine senkrecht zur optischen Achse gerichteten Planflächen auftreten, wie das bei den sogenannten Planplattenmikrometern in Mittelstellung der Fall ist. Somit werden störende Interferenzen infolge auf der Achse rückgespiegelten Lichtes vermieden.

Die Lösung gemäss Anspruch 2 sieht zwei gegeneinander verschiebbare Keile vor, die gemeinsam um die optische Achse gedreht werden können. Bei dieser Lösung sind immerhin zwei von vier Flächen permanent gegen die optische Achse geneigt.

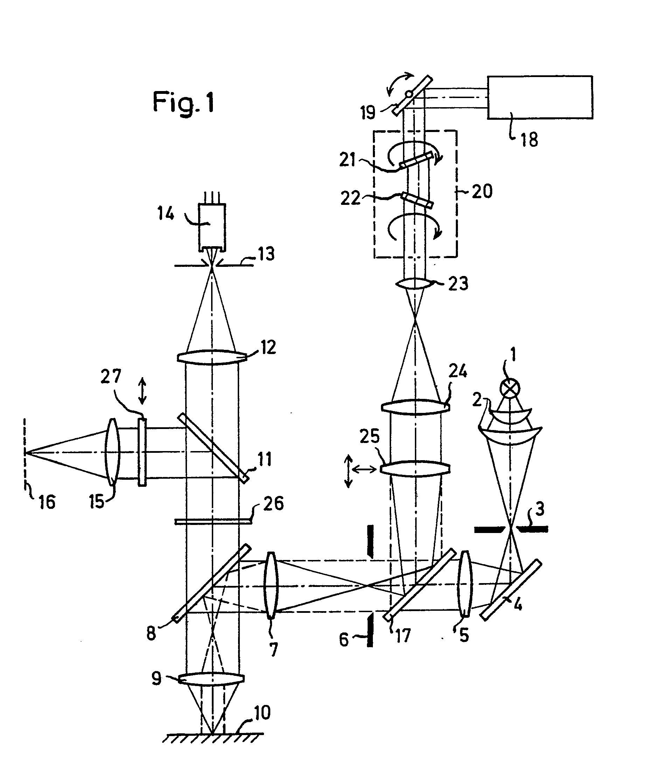

Beiden Lösungen gemeinsam ist der Vorteil des konstanten Winkels der Glas/Luft-Grenzflächen gegen die optische Achse. Dadurch wird verhindert, dass der Justiervorgang eine Änderung der transmittierten Lichtintensität verursacht. In beiden Fällen ist auch die Fassung und Führung der Einzelelemente (Platten bzw. Keile) sehr einfach durch ineinandergesteckte Ringe (Tubusführung) zu bewerkstelligen. Weitere vorteilhafte Ausgestaltungen der Erfindung sind in den Unteransprüchen beschireben und werden nachstehend anhand der Fig. 1-5 der beigefügten Zeichnungen näher erläutert:

Fig. 1 zeigt die Prinzipskizze eines Auflichtfluoreszenzmikroskops mit Laseranregung;

Fig. 2 zeigt eine alternative Ausführungsform für das Justierelement (20) aus Fig. 1;

Fig. 3 ist die Schnittzeichnung der Fassung für das Justierelement (20) aus Fig. 1;

Fig. 4 zeigt die Fassung aus Fig. 3 in Aufsicht;

Fig. 5 ist eine Schnittzeichnung der Fassung für das Justierelement aus Fig. 2.

Das in Fig. 1 gezeigte Beleuchtungssystem eines Auflichtfluoreszenzmikroskops enthält in herkömmlicher Anordnung eine Lichtquelle 1, die von einem Kollektor 2 in die Ebene der Aperturblende 3 abgebildet wird. Darauf folgen ein Umlenkspiegel 4, eine Linse 5 zur Abbildung der Aperturblende 3 in die hintere Brennebene des Objektivs 9 nach Einspiegelung durch den halbdurchlässigen Spiegel 8.

Der Beobachtungsstrahlengang umfasst neben dem Objektiv 9 zur Abbildung der Objektebene 10 einen schaltbaren Spiegel 11, der den Strahlengang entweder in den Binokulartubus ablenkt, wo mit Hilfe der Tubuslinse 15 das dem Betrachter dargebotenen Zwischenbild 16 entsteht, oder in einer zweiten Schaltstellung ungehindert passieren lässt. Dann erzeugt die Tubuslinse 12 das Zwischenbild in der Ebene der Photometerblende 13, die vor einem Photomultiplier 14 angeordnet ist.

Zur Fluoreszenzanregung wird ein Helium-Cadmium-Laser 18 verwendet, dessen Strahl über einen zur Winkeljustierung kippbaren Spiegel 19 geführt wird und danach ein aus zwei drehbaren Planplatten 21, 22 bestehendes Justierelement 20 zur Korrektur von Versatz passiert. Dahinter ist eine Aufweitungsoptik 23, 24 angeordnet. Darauf folgt eine definiert in drei Raumrichtungen verschiebbare Linse 25, die den Laserstrahl nach Einspiegelung über den Teilerspiegel 17 in der Ebene der Leuchtfeldblende 6 fokussiert und aufgrund ihrer Verschiebbarkeit die Lage des Laserfokus im Objekt lateral und in der Tiefe bestimmt. Gleichzeitig wird die Divergenz der Laserstrahlung mit der Linse 25 an die Beleuchtungsoptik des Mirkoskops angepasst. Die Brennweite der Linse 25 ist so gewählt, dass die Pupille des Objektivs 9 voll ausgeleuchtet wird, um eine beugungsbegrenzte Fokussierung zu erreichen.

Die Linse 25 kann aus dem Strahlengang ausgeschwenkt werden; der dann in die Brennebene des Objektivs fokussierte Laserstrahl leuchtet das Objektfeld flächig aus.

Im Beobachtungsstrahlengang ist ein auf die Wellenlänge des Lasers 18 abgestimmtes Sperrfilter 26 angeordnet sowie ein Augenschutzfilter 27, das elektrisch gesteuert in den Strahlengang einschwenkt sobald sich der Spiegel 11 in die gezeichnete Stellung bewegt und der Laser 18 im Betrieb ist. Damit werden Schädigungen des Beobachters durch den auf die Netzhaut abgebildeten, intensiven Laserfokus vermieden.

Wenn der Strahl, der den Laser 18 verlässt, während des Betriebs eine Drift in Form von Parallelversatz erfährt, wird dieser Versatz um das Verhältnis der Brennweiten der Linsen 24 und 23 vergrössert und führt zu einer unsymmetrischen Ausleuchtung der Pupille des Objektivs 9. Die Folge ist eine vom Beobachter deutlich wahrnehmbare Auffächerung des Laserfokus in der Objektebene.

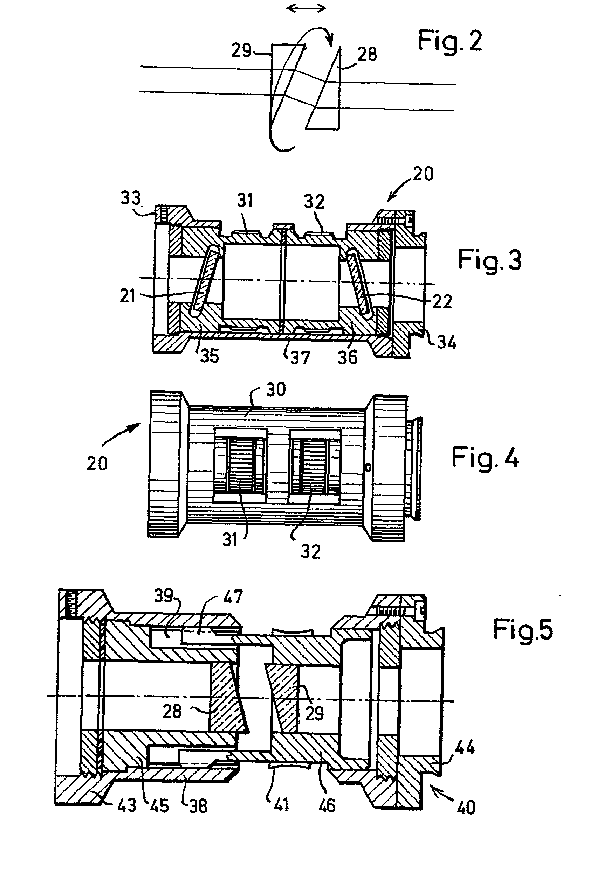

Durch Drehung der Rändel 31 und 32 an dem in Fig. 3 und 4 detailliert dargestellten Justierelement 20 wird dieser störende Versatz beseitigt. Jede der beiden in den Tuben 35, 36 geneigt angeordneten Platten 21 und 22 bewirkt einen konstanten Strahlversatz, der seiner Richtung nach aufgrund der drehbaren Lagerung in dem von den Schwalbenaufnahmen 33 und 34 abgeschlossenen, rohrförmigen Gehäuse 37 variabel ist. Nach den Gesetzen der Vektoraddition lässt sich daher der Laserstrahl in einem kreisförmigen Bereich justieren, dessen Radius dem doppelten Versatz an einer Planplatte entspricht.

In Fig. 2 sind als alternatives Justierelement anstelle der Planplatten 21 und 22 zwei Keilprismen 28 und 29 gezeigt. Durch Verändern ihres Abstandes lässt sich Parallelversatz dem Betrage nach und durch gemeinsames Drehen beider Prismen der Richtung nach kompensieren. Dazu sind die Keile 28 und 29 zu einer Baueinheit 40 zusammengefasst, die in der Fig. 5 detaillierter dargestellt ist:

Ebenso wie das Justierelement 20 aus Fig. 3 und 4 enthält die Baueinheit 40 zwei Schwalbenaufnahmen 43 und 44 an den beiden Enden eines ringförmigen Gehäuses 38, in dem der Träger 45 für den Keil 28 drehbar, jedoch gegen achsiale Bewegungen gesichert ist, und der Träger 46 für den Keil 29 drehbar und verschiebbar geführt ist. Ein Rändel 41 auf dem Träger 46 ist mit zwei Fingern einer Hand durch zwei einander gegenüberliegende Ausbrüche im Gehäusering 38 hindurch sowohl achsial zu verschieben als auch zu verdrehen. Beim Verdrehen des Rändels 41 wird aufgrund des Eingriffs der Arme 47 des Trägers 46 in die Nuten 39 des Trägers 45 letzterer mitgenommen, wodurch beide Prismen 28 und 29 gemeinsam bewegt werden.

**Patentansprüche**

1. Optisches Justierelement zur achsenparallelen Versetzung eines in ein optisches Gerät einzukoppelnden Strahlenbündels, dadurch gekennzeichnet, dass es aus zwei gegen die optische Achse geneigten, transparenten, planparallelen Platten (21, 22) besteht, die unter konstantem Kippwinkel gegen die optische Achse geneigt sind, und dass jede Platte für sich und beide Platten gemeinsam um die optische Achse drehbar gelagert ist.

2. Optisches Justierelement zur achsenparallelen Versetzung eines in ein optisches Gerät einzukoppelnden Strahlenbündels, dadurch gekennzeichnet, dass es aus zwei transparenten Keilen (28, 29) besteht, die längs der optischen Achse gegeneinander verschiebbar und gemeinsam um die optische Achse drehbar aber gegeneinander unverdrehbar gelagert sind.

3. Optisches Justierelement nach Anspruch 1 oder 2, dadurch gekennzeichnet, dass die Flächen der Platten (21, 22) bzw. Keile (28, 29) eine Entspiegelungsschicht tragen.

4. Optisches Justierelement nach Anspruch 1-3, dadurch gekennzeichnet, dass die Fassungen (35, 36; 45, 46) der Platten (21, 22) bzw. Keile (28, 29) in einem zur optischen Achse konzentrischen Tubus (37; 38) drehbar bzw. verschiebbar geführt sind.

5. Optisches Justierelement nach Anspruch 1-4, dadurch gekennzeichnet, dass die Platten (21, 22) bzw. Keile (28, 29) zu einer separaten, als Zwischenstück ausgebildeten Baugruppe (20; 40) zusammengefasst sind.

6. Optisches Justierelement nach Anspruch 1 oder 2, dadurch gekennzeichnet, dass das optische Gerät ein Mikroskop ist und dass hinter dem Justierelement (20) eine Aufweitungsoptik (23, 24) sowie eine verschiebbare Zwischenlinse (25) angeordnet ist, die das Strahlbündel in einer zur Objektebene (10) konjugierten Bildebene (6) fokussiert.

7. Optisches Justierelement nach Anspruch 6, dadurch gekennzeichnet, dass die Zwischenlinse (25) ausschwenkbar befestigt ist.

8. Optisches Justierelement nach Anspruch 6-7, dadurch gekennzeichnet, dass vor der Aufweitungsoptik (23, 24) zusätzlich ein Kippspiegel (19) zu Winkeljustierung des Laserstrahls vorgesehen ist.

## Revendications

1. Elément d'ajustement optique pour décaler parallèlement à son axe un faisceau de rayons à introduire dans un appareil optique, caractérisé en ce qu'il est constitué de deux lames transparentes (21, 22) à faces planes et parallèles, qui sont inclinées sur l'axe optique sous un angle de basculement constant, et que les deux lames sont montées rotatives individuellement et conjointement autour de l'axe optique.

2. Elément d'ajustement optique pour décaler parallèlement à son axe un faisceau de rayons à introduire dans un appareil optique, caractérisé en ce qu'il est constitué de deux coins transparents (28, 29) qui sont montés déplaçables l'un par rapport à l'autre le long de l'axe optique et conjointement rotatifs autour de l'axe optique, mais sans pouvoir être tournés l'un par rapport à l'autre.

3. Elément selon la revendication 1 ou 2, caractérisé en ce que les faces des lames (21, 22) ou des coins (28, 29) portent une couche antireflet.

4. Elément selon l'une des revendications 1 à 3, caractérisé en ce que les montures (35, 36; 45, 46) des lames (21, 22) ou des coins (28, 29) sont guidées rotatives ou coulissantes dans un tube (37; 38) concentrique à l'axe optique.

5. Elément selon l'une des revendications 1 à 4, caractérisé en ce que les lames (21, 22) ou les coins (28, 29) sont rassemblés en une unité séparée (20; 40) réalisée comme une pièce intermédiaire.

6. Elément selon la revendication 1 ou 2, caractérisé en ce que l'appareil optique est un microscope et que l'élément d'ajustement (20) est suivi d'une optique d'élargissement (23, 24) ainsi que d'une lentille intermédiaire (25) déplaçable qui focalise le faisceau dans un plan image (6) conjugué au plan objet (10).

7. Elément selon la revendication 6, caractérisé en ce que la lentille intermédiaire (25) est fixée de manière à pouvoir être écartée par pivotement.

8. Elément selon la revendication 6 ou 7, caractérisé en ce qu'un miroir basculant (19) est prévu en plus devant l'optique d'élargissement (23, 24) pour l'ajustement angulaire du faisceau laser.

## Claims

1. An optical adjustment device for displacing a beam of rays parallel to its axis which beam has to be coupled into an optical instrument, characterized by the fact that the adjustment device comprises two transparent parallel plates (21, 22) which are inclined relative to the optical axis with constant angle of inclination, and that each plate itself and both plates together are mounted for rotation around the optical axis.

2. An optical adjustment device for displacing a beam of rays parallel to its axis which beam has to be coupled into an optical instrument, characterized by the fact that the adjustment device comprises two transparent wedges (28, 29) mounted for rotation around the optical axis, the two wedges being displaceable with respect to each other along the optical axis but being non-turnable with respect to each other.

3. An optical adjustment device according to claim 1 or claim 2, characterized by the fact that the surfaces of said plates (21, 22) or wedges (28, 29) carry a reflection-reducing coating.

4. An optical adjustment device according to claims 1-3, characterized by the fact that the mounts (35, 36; 45, 46) of said plates (21, 22) or wedges (28, 29) are guided linear or rotatably in a tube concentric relative to the optical axis.

5. An optical adjustment device according to claims 1-4, characterized by the fact that the plates (21, 22) or wedges (28, 29) are combined to form a separate structural group developed as an intermediate unit.

6. An optical adjustment device according to claims 1 or 2, characterized by the fact that the optical instrument is a microscope and that behind the adjustment device are arranged an expansion lens system (23, 24) and a displaceable intermediate lens (25) which focuses the beam of rays in an image plane (6) which is conjugated to an object plane (10) of the microscope.

7. An optical adjustment device according to claim 6, characterized by the fact that said intermediate lens (25) is mounted in such a manner that it can be swung out.

8. An optical adjustment device according to claims 6-7, characterized by the fact that an inclinable mirror (19) for adjusting the angle of the laser beam is located in front of said expansion lens system (23, 24).

# Fig.1

Fig. 2

Fig. 3

Fig. 4

Fig.5